# EUROPÄISCHE PATENTSCHRIFT

(11) **EP 1 553 203 B1**
(45) Veröffentlichungstag und Bekanntmachung des Hinweises auf die Patenterteilung: **17.12.2008**
(21) Anmeldenummer: 04030231.7
(22) Anmeldetag: 21.12.2004
(51) Int. Cl.: C23C 4/08, C23C 4/12, C23C 14/16, C23C 14/24, C25F 3/00, B22F 7/00, F01D 5/30

(54) **Verfahren zur Herstellung von Hohlschaufeln sowie eines Rotors mit Hohlschaufeln**
Method for producing hollow airfoils, also to produce a rotor with hollow airfoils
Procédé pour fabriquer des aubes creuses, aussi pour un rotor avec les aubes creuses

(30) Priorität: 10.01.2004 DE 102004001575
(43) Veröffentlichungstag der Anmeldung: 13.07.2005
(73) Patentinhaber: MTU Aero Engines GmbH, 80995 München (DE)
(72) Erfinder: Bayer, Erwin, Dr., 85221 Dachau (DE); Knott, Ulrich, Dr., 80997 München (DE)
(74) Vertreter: Söllner, Oliver

(56) Entgegenhaltungen:
- EP-A- 0 451 512
- EP-A- 1 070 769
- DE-A1- 3 831 692
- DE-A1- 19 609 690
- US-A- 5 547 769

## Beschreibung

Die Erfindung betrifft ein Verfahren zur Herstellung von Hohlschaufeln, insbesondere für Gasturbinen. Des Weiteren betrifft die Erfindung ein Verfahren zur Herstellung eines Rotors mit Hohlschaufeln.

Moderne Gasturbinen, insbesondere Flugtriebwerke, müssen höchsten Ansprüchen im Hinblick auf Zuverlässigkeit, Gewicht, Leistung, Wirtschaftlichkeit und Lebensdauer gerecht werden. In den letzten Jahrzehnten wurden insbesondere auf dem zivilen Sektor Flugtriebwerke entwickelt, die den obigen Anforderungen voll gerecht werden und ein hohes Maß an technischer Perfektion erreicht haben. Bei der Entwicklung von Flugtriebwerken spielt unter anderem die Werkstoffauswahl, die Suche nach neuen, geeigneten Werkstoffen sowie die Suche nach neuen Fertigungsverfahren eine entscheidende Rolle.

Zur Reduzierung des Gewichts von Gasturbinenbauteilen ist es aus dem Stand der Technik bereits bekannt, Schaufeln von Gasturbinen als Hohlschaufeln auszubilden. Die Schaufeln von Gasturbinen tragen nämlich maßgeblich zum Gewicht einer Gasturbine bei. Je stärker das Gewicht der Gasturbine reduziert werden kann, desto günstiger fällt das sogenannte Schub-Gewichtsverhältnis des Flugtriebwerks aus, welches ein entscheidendes Wettbewerbsmerkmal für Flugtriebwerke darstellt.

Als Herstellverfahren für Hohlschaufeln ist aus dem Stand der Technik das sogenannte SPF (Super Plastic Forming) DB (Diffusion Bonding)-Verfahren (nachfolgend kurz SPF DB-Verfahren genannt) bekannt. Beim SPF DB-Verfahren werden mindestens drei Elemente durch Diffusionsschweißen miteinander verbunden, wobei zwei äußere Elemente der Bildung der Außenwände der Hohlschaufel und ein mittleres Element der Bereitstellung einer Stützkonstruktion dient. Die drei miteinander durch Diffusionsschweißen verbundenen Elemente werden durch Aufblasen bzw. Aufblähen derart superplastisch umgeformt, dass sich eine Hohlschaufel mit dem gewünschten Schaufelprofil ergibt.

Nach einem anderen, aus dem Stand der Technik bekannten Verfahren zur Herstellung von Hohlschaufeln werden die Hohlschaufeln aus zwei Halbschalen zusammengefügt, wobei die beiden Halbschalen bereits im Sinne des gewünschten Schaufelprofils gewölbt sind.

Aus der EP-A-0 451 512 ist ein Verfahren zum Herstellung von Schaufeln, insbesondere für Gasturbinen wie Flugtriebwerke, mit folgenden Schritten bekannt: a) Bereitstellen eines Formkörpers; b) Überziehen des Formkörpers mit einer metallischen Deckschicht durch Materialabscheidung, c) Nachbearbeiten der Deckschicht zu Schaufeloberflächen mit definierter Profilierung.

Hinsichtlich weiteren Standes der Technik sei auf die DE-A1-196 09 690, auf die EP-A-1 070 769 und auf die US-A-5 547 769 verwiesen, die allesamt Verfahren zum Abscheiden von metallischen Schichten auf Hohlschaufeln offenbaren. Die DE-A1-38 31 692 betrifft ein Fügeverfahren für Schaufeln.

Hiervon ausgehend liegt der vorliegenden Erfindung das Problem zu Grunde, ein neuartiges Verfahren zur Herstellung von Hohlschaufeln vorzuschlagen. Dieses Problem wird durch ein Verfahren mit den Merkmalen des Patentanspruchs 1 gelöst. Erfindungsgemäß umfasst das Verfahren zumindest die folgenden Schritte: a) Bereitstellen eines als Stützkörper ausgebildeten Formkörpers aus einem porösem Material wie einem Metallschaum oder einem Filz, b) Überziehen des Formkörpers mit einer metallischen Deckschicht aus Titan oder aus einer Titanlegierung durch Materialabscheidung, c) Nachbearbeiten der Deckschicht zu Schaufeloberflächen mit definierter Profilierung.

Nach einer vorteilhaften Weiterbildung der Erfindung wird als Formkörper ein Stützkörper mit einem Stabilisierungsrand bereitgestellt, wobei der Stabilisierungsrand eine Vorderkante und eine Rückkante der herzustellenden Hohlschaufel bildet. Hierdurch lässt sich die Vogelschlagfestigkeit der hergestellten Hohlschaufel erhöhen.

Das erfindungsgemäße Verfahren zur Herstellung eines Rotors mit Hohlschaufeln ist im Patentanspruch 8 definiert.

Bevorzugte Weiterbildungen der Erfindung ergeben sich aus den Unteransprüchen und der nachfolgenden Beschreibung.

Zur Herstellung der erfindungsgemäßen Hohlschaufel wird in einem ersten Schritt des erfindungsgemäßen Verfahrens ein Formkörper für die Hohlschaufel bereitgestellt. Bei dem Formkörper handelt es sich um einen Stützkörper vorzugsweise mit einem Stabilisierungsrand, wobei der Stabilisierungsrand vorzugsweise als Blechrand ausgebildet ist, der im Bereich einer Vorderkante sowie einer Rückkante bzw. einer Strömungseintrittskante sowie Strömungsaustrittskante der herzustellenden Hohlschaufel verläuft.

Der Stabilisierungsrand bzw. Blechrand erhöht die Festigkeit der herzustellenden Hohlschaufel gegenüber Vogeleinschlag. Der Stützkörper kann aus porösem Material, insbesondere aus einem filzartigen Material oder aus Metallschaum hergestellt sein. Weiterhin kann der Stützkörper aus einer Honigwabenstruktur bestehen, die von einer folienartigen Hülle überzogen ist.

In einem zweiten Schritt des erfindungsgemäßen Verfahrens wird der oben bereitgestellte Formkörper mit einer Metallischen Deckschicht aus Titan oder aus einer Titanlegierung durch Materialabscheidung überzogen. Das Abscheiden erfolgt vorzugsweise durch thermisches Spritzen, insbesondere durch Niederdruckplasmaspritzen oder durch kinetisches Kaltkompaktieren oder durch Aufdampfen des Materials mithilfe einer gerichteten Materialdampfwolke. Die Details dieser Materialabscheideverfahren sind dem hier angesprochenen Fachmann geläufig und es bedarf daher keiner näheren Erläuterung derselben.

Im Anschluss an die Materialabscheidung auf den Formkörper wird die so bereitgestellte Deckschicht in einem dritten Schritt des erfindungsgemäßen Verfahrens einer Nachbearbeitung unterzogen, um letztendlich eine Hohlschaufel bereitzustellen, deren Schaufeloberflächen eine definierte Profilierung aufweisen. Die Nachbearbeitung kann durch ein elektrochemisches Verfahren, eine sogenannte ECM-Bearbeitung, erfolgen oder auch durch ein mechanisches Verfahren, wie zum Beispiel Gleitschleifen.

Mehrere auf die oben beschriebene Art und Weise hergestellte Hohlschaufeln können in einer Weiterbildung des erfindungsgemäßen Verfahrens zur Herstellung eines integral beschaufelten Rotors an einen Rotorträger gefügt werden. Bei dem Rotorträger kann es sich um einen Ring oder eine Scheibe handeln, wobei die Hohlschaufeln vorzugsweise durch lineares Reibschweißen an den Rotorträger gefügt werden. Bei einem ringförmigen Rotorträger wird so ein Bling (Bladed Ring), bei einem scheibenförmigen Rotorträger wird so ein Blisk (Bladed Disc) geschaffen.

An dieser Stelle sei abschließend darauf hingewiesen, dass sowohl der Formkörper für die Hohlschaufeln als auch der Rotorträger aus einem MMC-Werkstoff hergestellt sein können. Hierdurch kann die Schwingfestigkeit der Hohlschaufel bzw. des integral beschaufelten Rotors verbessert werden. Auch erhöht sich hierdurch nochmals die Vogelschlagfestigkeit des hergestellten Gasturbinenbauteils.

## Patentansprüche

1. Verfahren zur Herstellung von Hohlschaufeln, insbesondere für Gasturbinen wie Flugtriebwerke, mit folgenden Schritten:
a) Bereitstellen eines als Stützkörper ausgebildeten Formkörpers aus einem porösem Material wie einem Metallschaum oder einem Filz,
b) Überziehen des Formkörpers mit einer metallischen Deckschicht aus Titan der aus einer Titanlegierung durch Materialabscheidung,
c) Nachbearbeiten der Deckschicht zu Schaufeloberflächen mit definierter Profilierung.

2. Verfahren nach Anspruch 1,
**dadurch gekennzeichnet,**
**dass** der Stützkörper einen Stabilisierungsrand aufweist, der eine Vorderkante und eine Rückkante der herzustellenden Hohlschaufel bildet.

3. Verfahren nach Anspruch 1 oder 2,
**dadurch gekennzeichnet,**
**dass** die Materialabscheidung durch thermisches Spritzen, insbesondere durch Niederdruckplasmaspritzen, erfolgt.

4. Verfahren nach Anspruch 1 oder 2,
**dadurch gekennzeichnet,**
**dass** die Materialabscheidung durch kinetisches Kaltkompaktieren erfolgt.

5. Verfahren nach Anspruch 1 oder 2,
**dadurch gekennzeichnet,**
**dass** die Materialabscheidung durch Aufdampfen mittels einer gerichteten Materialdampfwolke erfolgt.

6. Verfahren nach einem oder mehreren der Ansprüche 1 bis 5,
**dadurch gekennzeichnet,**
**dass** die Nachbearbeitung der Deckschicht zu Schaufeloberflächen durch elektrochemische Bearbeitung (ECM-Bearbeitung) erfolgt.

7. Verfahren nach einem oder mehreren der Ansprüche 1 bis 5,
**dadurch gekennzeichnet,**
**dass** die Nachbearbeitung der Deckschicht zu Schaufeloberflächen durch Gleitschleifen erfolgt.

8. Verfahren zur Herstellung eines Rotors mit Hohlschaufeln, insbesondere eines integral beschaufelten Gasturbinenrotors, mit folgenden Schritten:
a) Bereitstellen mindestens einer Hohlschaufel durch ein Verfahren nach einem oder mehreren der Ansprüche 1 bis 7,
d) Fügen mehrerer derartiger Hohlschaufeln an einen schiebenförmigen oder ringförmigen Rotorträger.

9. Verfahren nach Anspruch 8,
**dadurch gekennzeichnet,**
**dass** das Fügen durch lineares Reibschweißen erfolgt.

## Claims

1. Method for the production of hollow airfoils, in particular for gas turbines such as aircraft engines, comprising the following steps:
a) the provision of a moulded body designed as a support body and made of a porous material such as a metal foam or felt,
b) the coating of the moulded body with a metallic finish coating of titanium or a titanium alloy by material deposition,
c) the reworking of the finish coating to produce airfoil surfaces with a defined profiling.

2. Method according to claim 1,
**characterised in that**
the support body has a stabilising edge forming a front edge and a rear edge of the hollow airfoil to be produced.

3. Method according to claim 1 or 2,
**characterised in that**
the material deposition is carried out by thermal spraying, in particular by low-pressure plasma spraying.

4. Method according to claim 1 or 2,
**characterised in that**
the material deposition is carried out by kinetic cold compacting.

5. Method according to claim 1 or 2,
**characterised in that**
the material deposition is carried out by vapour deposition by means of a directed material vapour cloud.

6. Method according to one or more of claims 1 to 5,
**characterised in that**
the reworking of the finish coating to produce airfoil surfaces is carried out by electro-chemical machining (ECM).

7. Method according to one or more of claims 1 to 5,
**characterised in that**
the reworking of the finish coating to produce airfoil surfaces is carried out by barrel finishing.

8. Method for the production of a rotor with hollow airfoils, in particular of an integrally bladed gas turbine rotor, comprising the following steps:
a) the provision of at least one hollow airfoil by using a method according to one or more of claims 1 to 7,
b) the assembly of a plurality of such hollow airfoils on a disk-shaped or annular rotor support.

9. Method according to claim 8,
**characterised in that**
the assembly is carried out by linear friction welding.

## Revendications

1. Procédé pour fabriquer des aubes creuses, en particulier pour des turbines à gaz telles que des groupes motopropulseurs, comprenant les étapes suivantes :
a) mise à disposition d'un corps moulé réalisé comme un corps d'appui en un matériau poreux tel qu'une mousse métallique ou un feutre,
b) revêtement du corps moulé d'une couche de recouvrement métallique en titane ou en un alliage de titane par dépôt de matière,
c) rectification de la couche de recouvrement pour former des surfaces d'aube au profilage défini.

2. Procédé selon la revendication 1, **caractérisé en ce que** le corps d'appui présente un bord de stabilisation qui forme une arête avant et une arête arrière des aubes creuses à fabriquer.

3. Procédé selon la revendication 1 ou 2, **caractérisé en ce que** le dépôt de matière est effectué par projection thermique, en particulier par projection au plasma basse pression.

4. Procédé selon la revendication 1 ou 2, **caractérisé en ce que** le dépôt de matière est effectué par compactage à froid cinétique.

5. Procédé selon la revendication 1 ou 2, **caractérisé en ce que** le dépôt de matière est effectué par métallisation sous vide au moyen d'un nuage de vapeur de matière dirigé.

6. Procédé selon l'une ou plusieurs quelconques des revendications 1 à 5, **caractérisé en ce que** la rectification de la couche de recouvrement pour former des surfaces d'aube est effectuée par usinage électrochimique (usinage ECM).

7. Procédé selon l'une ou plusieurs quelconques des revendications 1 à 5, **caractérisé en ce que** la rectification de la couche de recouvrement pour former des surfaces d'aubes est effectuée par ponçage.

8. Procédé de fabrication d'un rotor avec des aubes creuses, en particulier d'un rotor de turbine à gaz à aubes intégrées, comprenant les étapes suivantes :
a) mise à disposition d'au moins une aube creuse par un procédé selon l'une ou plusieurs quelconques des revendications 1 à 7,
d) assemblage de plusieurs aubes creuses de la sorte sur un support de rotor en forme de disque ou d'anneau.

9. Procédé selon la revendication 8, **caractérisé en ce que** l'assemblage est effectué par soudage par friction linéaire.
